# EUROPÄISCHE PATENTSCHRIFT

(11) **EP 0 952 465 B1**
(45) Veröffentlichungstag und Bekanntmachung des Hinweises auf die Patenterteilung: **09.04.2008**
(21) Anmeldenummer: 99810031.7
(22) Anmeldetag: 18.01.1999
(51) Int. Cl.: G01V 3/15

(54) **Markiervorrichtung**
Marking device
Dispositif de marquage

(30) Priorität: 22.04.1998 DE 19817953
(43) Veröffentlichungstag der Anmeldung: 27.10.1999
(73) Patentinhaber: HILTI Aktiengesellschaft, 9494 Schaan (LI)
(72) Erfinder: Nipp, Hansjörg, 9493 Mauren (LI)
(74) Vertreter: Wildi, Roland

(56) Entgegenhaltungen:
- CH-A- 483 642
- CH-A- 676 051
- JP-A- 61 104 284
- US-A- 5 307 272
- US-A- 5 721 489

## Beschreibung

Die Erfindung betrifft eine Vorrichtung zur Anzeige von Orten an einer Oberfläche eines Bauteils, an denen mit Hilfe einer Detektionseinrichtung unterhalb der Oberfläche liegende Elemente aufgefunden werden, gemäss dem Oberbegriff des Patentanspruchs 1.

Wenn an einer bestimmten Stelle eines Bauwerks oder eines Bauelements ein Loch gebohrt oder eine Befestigung, beispielsweise durch Nageln oder dergleichen, erstellt werden soll, ist es vielfach erforderlich, festzustellen, was an diesem Ort unterhalb der Oberfläche angeordnet ist. Auf diese Weise soll verhindert werden, dass beispielsweise elektrische Leitungen oder Flüssigkeit führende Rohre beschädigt werden. Im Fall von armierten Bauteilen ist es wichtig, zu wissen, wo und in welcher Richtung verlaufend die Armierungen angeordnet sind, damit beispielsweise Bohrungen an den dafür vorgesehenen Orten durchgeführt werden können und nicht durch Armierungstreffer verhindert werden. Zu diesem Zweck sind aus dem Stand der Technik Einrichtungen bekannt, die unter Ausnutzung bekannter physikalischer Effekte eine Untersuchung des Untergrunds von der Oberfläche eines Bauteils her ermöglichen. Ein Beispiel für eine derartige Einrichtung ist in der EP-B-0 506 605 (US-A-5,296,807) beschrieben, mit deren Hilfe magnetisierbares Material im Untergrund auffindbar ist. Neben diesen Einrichtungen zum Auffinden von vorwiegend metallischen Elementen sind Geräte bekannt, mit denen unter Ausnutzung von Ultraschallwellen oder Radarstrahlung auch nicht-metallische Elemente im Untergrund feststellbar sind.

Zum Auffinden von im Untergrund befindlichen Elementen wird die Oberfläche des Bauteils mit einer Punktsonde oder einer scannenden Einrichtung, beispielsweise einer Einrichtung gemäss der EP-B-0 506 605, abgesucht. Bei Punktsonden wird der Ort an der Oberfläche bestimmt; danach wird von Hand mit einem Stift oder einem Stempel eine Markierung angebracht. Bei einer scannenden Einrichtung gemäss der EP-B-0 506 605 wird eine unter der Oberfläche aufgefundene Armierung auf einem Bildschirm angezeigt. Die Zuordnung der Position auf dem Bildschirm zu dem effektiven Ort auf dem Bauteil erfolgt mittels eines Messrasters, auf dem an der korrespondierenden Stelle von Hand eine Markierung angebracht wird. Die händische Markierung der Oberfläche ist mühsam und kann mit einem gewissen Fehler behaftet sein. Es gibt Mess-Sonden, bei denen am oder im Gehäuse eine Öffnung vorgesehen ist, durch die ein Markierstift gesteckt werden kann. Das Anbringen einer Markierung durch eine Öffnung kann wegen der händischen Stiftführung und wegen Ableseungenauigkeiten zu Abweichungen vom effektiven Ort führen. Bei der Arbeit mit einem Messraster hängt die Genauigkeit vielfach von der Sorgfalt des Benutzers bei der Übertragung der aufgefundenen Positionen ab.

Aus der US 5 307 272 ist ein Minenfeld Erkundungs- und Detektorsystem bekannt, das eine Remote-Sensor-Plattform mit einer Mehrzahl von Metalldetektoren und einer Mehrzahl von Radarsensoren aufweist. Die Remote-Sensor-Plattform wird über eine Verarbeitungs- und Kontrolleinheit ferngesteuert. Zur Markierung einer Stelle mit wahrscheinlichem Minenbesatz ist eine Markereinheit vorgesehen.

Aus der JP 61 104284 A ist ein Apparat zur Detektion von eingebetteten Gegenständen mit einer an ein Bauteil anlegbaren Sensorspule, die mit einer Detektorschaltung verbunden ist, bekannt. Die Mündung einer Spritzdüse ist dabei zentral in der Sensorspule angeordnet.

Aufgabe der vorliegenden Erfindung ist es daher, diesen Nachteilen der Vorrichtungen des Stands der Technik abzuhelfen. Systematische und zufällige Fehler beim Anzeichnen der Struktur von in Bauwerken oder in Bauteilen unter der Oberfläche angeordneten Elementen sollen vermieden werden.

Die Lösung dieser Aufgabe besteht in einer Vorrichtung mit den im kennzeichnenden Abschnitt des Patentanspruchs 1 angeführten Merkmalen. Die erfindungsgemässe Vorrichtung zur Anzeige von Orten auf einer Oberfläche eines Bauteils, an denen mit Hilfe einer Detektionseinrichtung unterhalb der Oberfläche liegende Elemente aufgefunden werden, umfasst einen Abtastkopf, eine Positionsmesseinrichtung und eine in einem Gehäuse angeordnete Auswerteeinheit. Die Auswerteeinheit ist mit einer Markiereinrichtung verbunden, die derart mit der Auswerteeinheit zusammenwirkt, dass am Ort eines von der Detektionseinrichtung detektierten Elements an der Oberfläche des Bauteils automatisch eine sichtbare Markierung anbringbar ist, wobei die Markiereinrichtung wenigstens einen Behälter für eine Markierflüssigkeit, eine Aufbringeinheit mit mehreren Auftragdüsen und einer Auslöseeinrichtung umfasst.

Die erfindungsgemässe Markiereinrichtung ist am Ort des unterhalb der Oberfläche des Bauteils aufgefundenen Elements, beispielsweise einer Armierung, automatisch aktivierbar und erzeugt auf der Oberfläche eine sichtbare Markierung. Die Markierung kann direkt auf die Oberfläche des Bauteils aufgebracht werden; sie kann auch unter Zwischenlage beispielsweise einer Papierbahn auf diese aufgebracht werden. Zwischen dem aufgefundenen Ort und der markierten Stelle gibt es keinen Off-set mehr, da die Markiereinrichtung nur mehr am effektiven Ort aktivierbar ist. Dazu ist die Auswerteeinheit der Detektionseinrichtung mit einer Speichereinrichtung ausgestattet, in der die von der Positionsmesseinrichtung gelieferten Ortsdaten zusammen mit den Informationen über die unterhalb der Oberfläche des Bauteils aufgefundenen Elemente zunächst abgespeichert werden. Die in der Speichereinrichtung enthaltenen Ortsdaten und Informationen können zu einem späteren Zeitpunkt zur Steuerung einer separaten Markiereinrichtung dienen, die mit einer zur Detektionseinrichtung identischen Positionsmesseinrichtung ausgestattet ist. Die von der Positionsmesseinrichtung der Markiereinrichtung gemessenen Ortsdaten werden dabei laufend mit denjenigen der Positionsmesseinrichtung der Detektionseinrichtung verglichen. Sobald Übereinstimmung besteht, wird die Markiereinrichtung automatisch aktiviert, um eine sichtbare Markierung zu erzeugen.

In einer bevorzugten Ausführungsvariante der Erfindung sind die Detektionseinrichtung und die Markiereinrichtung zu einer Geräteeinheit zusammengefasst, die gleichzeitig über die Oberfläche des Bauteils bewegt wird. Die Markiereinrichtung ist dabei, bezogen auf eine vorgesehene Bewegungsrichtung der Vorrichtung, in einem definierten Abstand hinter dem Abtastkopf angeordnet und ist nach dem Weiterbewegen der Vorrichtung um den Abstand zwischen dem Abtastkopf und der Markiereinrichtung am Ort des von der Detektionseinrichtung unterhalb der Oberfläche des Bauteils detektierten Elements automatisch aktivierbar. Die gewählte Anordung hat den Vorteil, dass nur eine einzige Positionsmesseinrichtung erforderlich ist. Mögliche Abweichungen infolge von unterschiedlichen Positionsmesseinrichtungen der Detektionseinrichtung und der Markiereinrichtung werden auf diese Weise zuverlässig vermieden.

Die Markiereinrichtung kann beispielsweise einen stempelartigen Stössel umfassen, der an den gewünschten Orten in der Oberfläche des Bauteils Vertiefungen erzeugt. Vorzugsweise erfolgt die Kennzeichnung der Oberfläche an den Orten, an denen unter der Oberfläche Elemente aufgefunden worden sind, berührungslos.

Die Auftragdüsen der Markiereinrichtung sind entsprechend der von einem oder mehreren im Abtastkopf angeordneten Sensoren gelieferten Steuerinformationen quer zur Bewegungsrichtung der Vorrichtung bewegbar. In einer alternativen Ausführungsvariante der Erfindung sind die Auftragdüsen in einer zur Oberfläche des Bauteils parallelen Ebene drehbar gelagert. Für das Anbringen einer Markierung ist der Drehwinkel der Auftragdüse(n) in Abhängigkeit von der von einem oder mehreren im Abtastkopf angeordneten Sensoren gelieferten Steuerinformationen einstellbar.

Für die Markierung der Oberfläche erweist es sich von Vorteil, die Auftragdüsen in Zeilenform, senkrecht zur vorgesehen Bewegungsrichtung der Vorrichtung anzuordnen. In einer vorteilhaften Variante der Erfindung entspricht dabei die Anzahl der Auftragdüsen der Markiereinrichtung der Anzahl von Sensoren im Abtastkopf. Indem die Auftragdüsen in Zeilenform angeordnet sind, decken sie senkrecht zur Bewegungsrichtung der Vorrichtung einen grösseren Bereich ab. Bei gleicher Anzahl von Sensoren und Auftragdüsen ist jedem Sensor eine Auftragdüse zugeordnet, die gesondert ansteuerbar ist. Auf diese Weise ausgebildet, kann mit der Vorrichtung ein grösserer Bereich der Oberfläche in kürzerer Zeit untersucht werden. Der Verlauf von gegenüber der Bewegungsrichtung geneigt unter der Oberfläche liegenden Elementen kann auf diese Weise exakt ermittelt und angezeichnet werden. Parallel zur Bewegungsrichtung der Vorrichtung verlaufende Elemente werden meist von wenigstens einem der Sensoren erfasst und können von der nachfolgenden Auftragdüse angezeichnet werden. Nachdem die Untersuchung einer Oberfläche üblicherweise rasterartig, mit senkrecht zueinander verlaufenden Scanbewegungen erfolgt, werden unter der Oberfläche liegende Elemente, unabhängig von ihrem relativen Verlauf zu der Bewegungsrichtung der Vorrichtung, in jedem Fall aufgefunden und wird ihr Vorhandensein durch sichtbare Markierungen an der Oberfläche angezeigt.

Indem die Sensoren austauschbar im Abtastkopf angeordnet sind, ist die Vorrichtung für unterschiedliche Untersuchungen umrüstbar. Beispielsweise kann der Abtastkopf anstelle von Magnetsensoren, für das Auffinden von magnetisierbaren Elementen in einem Bauteil, mit Ultraschallsensoren oder mit einer Radar Sende- und Empfangseinrichtung ausgestattet werden, um auch nichtmetallische Elemente detektieren zu können.

Indem jeder Auftragdüse ein gesonderter Behälter für eine Markierflüssigkeit zugeordnet ist, können unterschiedliche Arten von visuellen Markierungen angebracht werden. Beispielsweise können bestimmte Zusatzinformationen, beispielsweise über den Charakter eines unter der Oberfläche aufgefundenen Elements, durch unterschiedliche Farben codiert mitgeteilt werden. Auf diese Weise kann beispielsweise mitgeteilt werden, ob es sich um eine Armierung, eine elektrische Leitung oder ein Wasserrohr handelt.

In einer vorteilhaften Ausführungsvariante der Erfindung ist die Markiereinrichtung einerseits zur visuellen Kennzeichnung des Ortes eines detektierten Elements und andererseits zur Wiedergabe von Zusatzinformationen, wie beispielsweise die festgestellte Tiefe, ausgebildet. Dies kann beispielsweise dadurch erfolgen, dass die Auftragdüsen derart angesteuert sind, dass die Markiereinrichtung den Verlauf des unter der Oberfläche aufgefundenen Elements angeben und zusätzlich in der Lage sind, Zahlen, Buchstaben, Symbole, Farbmarkierungen und dergleichen auf der Oberfläche anzuzeichnen.

Es ist zweckmässig, wenn die Auswerteeinheit mit einer Eingabeeinheit, beispielsweise einem alphanumerischen Eingabefeld zur Eingabe von Schwellenwerten und dergleichen, verbunden ist. Auf diese Weise ist die Markiereinrichtung beispielsweise derart ansteuerbar, dass nur dann eine Markierung erzeugt wird, wenn ein aufgefundenes Element der Oberfläche näher liegt als ein vorgegebener Schwellenwert.

Es erweist sich als zweckmässig, wenn die Markiereinrichtung in einem separaten Gehäuse angeordnet ist, das lösbar mit dem Gehäuse der Detektionseinrichtung verbindbar ist. Dabei kann die Markiereinrichtung eine eigene Energieversorgung aufweisen. Mit Vorteil wird sie aber von der Energieversorgung der Detektionseinrichtung gespeist. Die dafür erforderlichen Verbindungen werden zugleich mit der signalmässigen Kopplung über Verbindungsschnittstellen an den Gehäusen der Detektionseinrichtung und der Markiereinrichtung erstellt. Durch die gehäusemässige Trennung der beiden Einrichtungen kann die Detektionseinrichtung auch unabhängig von der Markiereinrichtung benützt werden. Auch hat der Anwender die Wahl, zunächst nur die Detektionseinrichtung allein zu erwerben. Später, wenn er feststellt, dass er auch den zusätzlichen Vorteil der Markiereinrichtung geniessen möchte, besteht die Möglichkeit, die bereits vorhandene Detektionseinrichtung zu ergänzen, um zu einem vorteilhaften Komplettsystem zu gelangen.

Im folgenden wird die Erfindung unter Bezugnahme auf ein in den schematischen Zeichnungen dargestelltes Ausführungsbeispiel näher erläutert. Es zeigen:
- Fig. 1: ein Schnittbild einer erfindungsgemässen Vorrichtung;
- Fig. 2: eine Ansicht der Vorrichtung gemäss Pfeil II in Fig. 1 in teilweise geschnittenem Zustand; und
- Fig. 3: ein Blockschema der erfindungsgemässen Vorrichtung.

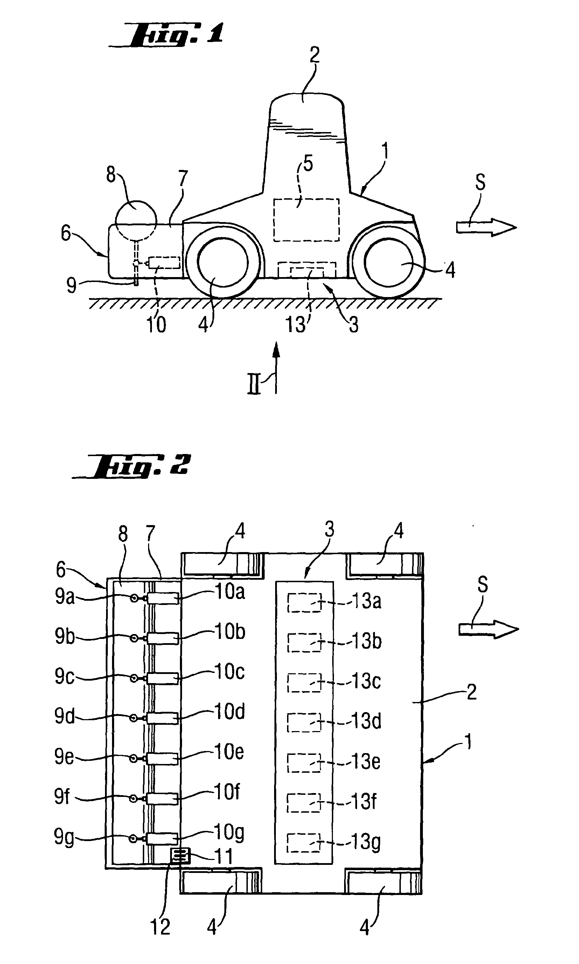

Die in den Fig. 1 dargestellte Vorrichtung umfasst eine Detektionseinrichtung 1, die in einem Gehäuse 2 untergebracht ist. Bei der Detektionseinrichtung 1 handelt es sich beispielsweise um eine Einrichtung zum Auffinden magnetisierbaren Materials in Bauteilen, wie sie beispielsweise in der EP-B-0 506 605 bzw. in der dazu korrespondierenden US-A-5,296,807, welche hiermit zum integralen Bestandteil der vorliegenden Beschreibung erklärt werden, beschrieben ist. Die dort offenbarte Detektionseinrichtung 1 enthält einen Abtastkopf 3, der beispielsweise einen Permanentmagneten zur Einleitung eines Magnetfelds in das Bauteil sowie zwei, auf nur einer Polfläche des Permanentmagneten nebeneinanderliegend angeordnete Feldplatten aufweist, die in Differenzschaltung miteinander verbunden sind und das durch das magnetisierbare Material gestörte Magnetfeld des Permanentmagneten messen. Die an jeweiligen Positionen von den Feldplattenpaaren gelieferten Differenzmesswerte dienen zur Bildung eines Differenzmess-Signals, aus dem nach Differenzierung auf die Lage, insbesondere die Tiefe, des magnetisierbaren Materials im Bauteil zurückgeschlossen wird. Die relative Lage des magnetisierbaren Materials innerhalb des Bauteils lässt sich dann beispielsweise auf einer an der Einrichtung vorgesehenen Anzeige abbilden. Der Permanentmagnet und die in Differenzschaltung miteinander verbundenen Feldplatten bilden einen Sensor 13, der austauschbar im Abtastkopf 3 untergebracht ist.

Die Auswertung der erfassten Messwerte erfolgt in einer Auswerteeinheit 5, die Speicher- und Rechenkomponenten, beispielsweise einen Mikroprozessor, umfasst. Die Erfassung der örtlichen Lage an der Oberfläche des Bauteils erfolgt mit Hilfe einer mit dem Bezugszeichen 4 versehenen Positionsmesseinrichtung, die beispielsweise aus Rädern besteht, deren Umdrehungen registriert werden. Aus dem Umfang der Räder 4 oder einer Achse und der Anzahl der registrierten Umdrehungen wird in der Auswerteeinheit 5 auf die von einem Referenzort aus zurückgelegte Wegstrecke geschlossen.

Gemäss der Erfindung ist die Detektionseinrichtung 1 mit einer Markiereinrichtung 6 verbunden. Die Markiereinrichtung 6 umfasst innerhalb eines separaten Gehäuses 7 wenigstens einen Behälter 8 für eine Markierflüssigkeit und wenigstens eine Auftragdüse 9, die über ein Ventil 10 betätigbar ist. Die Auftragdüse 9 der Markiereinrichtung 6 ist, bezogen auf die durch den Pfeil S angedeutete vorgesehene Bewegungsrichtung der Vorrichtung, in einem definierten Abstand hinter Abtastkopf 3 angeordnet. Dieser Abstand ist in der Auswerteeinheit 5 abgespeichert. Die Markiereinrichtung 6 wird nach Massgabe eines vom Abtastkopf 3 an einem Ort unterhalb der Oberfläche eines Bauteils detektierten Elements ativiert, wenn die Vorrichtung um den Abstand zwischen dem Abtastkopf 3 und der Auftragdüse 9 weiterbewegt worden ist. Die Kontrolle des zurückgelegen Weges erfolgt dabei über die Positionsmesseinrichtung 4 der Detektionseinrichtung 1. Gemäss dem dargestellten Ausführungsbeispiel der Erfindung sind die Detektionseinrichtung 1 und die Markiereinrichtung 6 in separaten Gehäusen 2 bzw. 7 untergebracht. Es versteht sich, dass die Komponenten der Vorrichtung auch in einem gemeinsamen Gehäuse angeordnet sein können.

Fig. 2 zeigt die erfindungsgemässe Vorrichtung in einer schematischen Ansicht von unten, gemäss dem Pfeil II in Fig. 1. Die Detektionseinrichtung 1 und die Markiereinrichtung 6 sind über Verbindungsschnittstellen 11 und 12, die an den beiden Gehäusen 2 bzw. 7 vorgesehen sind, lösbar miteinander verbunden. Nicht näher bezeichnete Kontakte an den Verbindungsschnittstellen 11, 12 gewährleisten eine signalmässige Verbindung der im Gehäuse 7 der Markiereinrichung 6 angeordneten Ventile 10a - 10g für die Auftragdüsen 9a - 9g mit der nicht dargestellten Auswerteeinheit. Weiters sind an den Verbindungsschnittstellen 11, 12 Kontakte vorgesehen, über welche die Detektionseinrichtung 1 und die Markiereinrichtung 6 auch energetisch miteinander verbunden sind. Zwar kann im Gehäuse 7 der Markiereinrichtung 6 eine separate Energiequelle für die Betätigung der Ventile 10a - 10g vorgesehen sein. Zweckmässigerweise wird dazu aber bereits die - nicht näher dargestellte - Energiequelle im Gehäuse 2 der Detektionseinrichtung 1 verwendet. Als Energiequelle dienen üblicherweise Batterien oder Akkumulatoren.

Wie aus der Fig. 2 ersichtlich ist, entspricht die Anzahl der Auftragdüsen 9a - 9g der Anzahl der im Abtastkopf 3 auswechselbar angeordneten Sensoren 13a - 13g. Dabei ist jedem Sensor 13a - 13g eine Auftragdüse 9a - 9g zugeordnet. Die Anordnung der Auftragdüsen 9a - 9g ist dabei derart gewählt, dass sie in geradliniger Verlängerung, parallel zur vorgesehenen Bewegungsrichtung S der Vorrichtung hinter den zugehörigen Sensoren 13a - 13g liegen. Der geradlinige Verlauf der Bewegungsrichtung S der Vorrichtung ist durch die Anordnung und Ausrichtung der Räder Positionsmesseinrichtung 4 festgelegt. Die Auftragdüsen 9a - 9g können mit einem einzigen Behälter für Markierflüssigkeit verbunden sein. In einer vorteilhaften Variante der Erfindung ist jeder Auftragdüse 9a - 9g ein - in Fig. 2 nicht dargestellter - separater Behälter für Markierflüssigkeit vorgesehen.

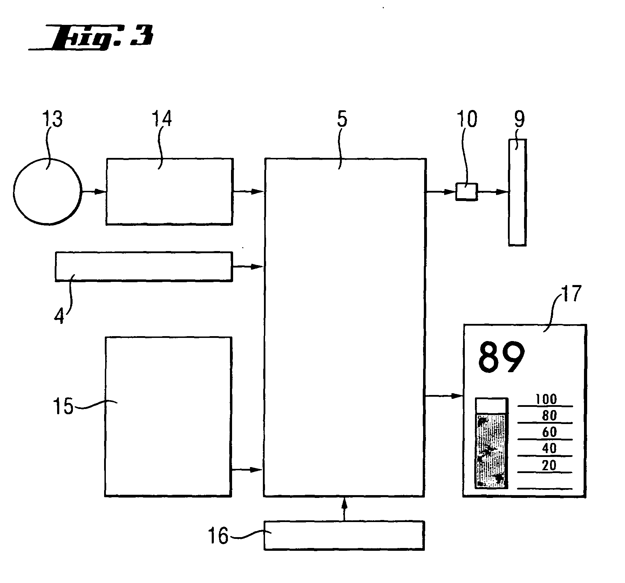

Fig. 3 zeigt in einem Blockschema die miteinander in Verbindung stehenden Komponenten der erfindungsgemässen Vorrichtung. Die zur Detektionseinrichtung gehörenden Komponenten umfassen einen oder mehrere Sensoren 13, die im Abtastkopf angeordnet sind. Die von den Sensoren 13 kommenden Signale werden in einer Signalaufbereitung 14 beispielsweise verstärkt, digitalisiert und in eine für die nachfolgende Auswerteeinheit 5 geeignete Form gebracht. Die Auswerteeinheit 5 umfasst Speichereinheiten, Recheneinheiten, beispielsweise einen Mikroprozessor, und dergleichen. Die von der Positionsmesseinrichtung 4 kommenden Signale werden ebenfalls entspechend aufbereitet und in die Auswerteeinheit 5 eingespeist. Die Auswerteeinheit 5 ist mit einer Energieversorgung 16 verbunden, die beispielsweise von einer Anzahl Batterien oder Akkumulatoren gebildet ist. Die Energieversorgung 16 liefert die erforderliche Energie für die Auswerteeinheit 5 und und die angeschlossenen Einrichtungen. Eine Eingabeeinheit 15, beispielsweise ein Tastenfeld, ermöglicht die Eingabe von Parametern, die für die Steuerung der Sensoren 13 und für die Beurteilung der gemessenen Signale durch die Auswerteeinheit 5 von Relevanz sind. Beispielsweise können über die Eingabeeinheit 15 Schwellenwerte für die Tiefe, in der ein aufgefundenes Element von Bedeutung ist, Werte zum Durchmesser der anzuzeigenden Elemente, Informationen über die Art des gesuchten Elements usw. eingegeben werden. Die Kontrolle der eingegebenen Daten und Informationen erfolgt über eine ausgangs an die Auswerteeinheit 5 angeschlossene Anzeigevorrichtung 17, beispielsweise ein Display. Die Anzeigevorrichtung 17 dient auch zur Anzeige von in der Auswerteeinheit 5 aufbereiteten Informationen über die von den Sensoren 13 im Untergrund detektierten Elemente. Beispielsweise wird der Verlauf und die Tiefenlage der Elemente angezeigt. Die Auswerteeinheit 5 ist auch mit einem oder mehreren Ventilen 10 verbunden, über die Auftragdüsen 9 der Markiereinrichtung für eine in einem oder in mehreren Behältern angeordnete Markierflüssigkeit ansteuerbar sind. Die Markiereinrichtung ist beispielsweise ein Tintenstrahldrucker, dessen Tintenabgabe nach dem Piezo- oder dem Bubblejet-Prinzip gesteuert abläuft. Nach Massgabe der von den Sensoren 13 gelieferten Messwerte, die nach vom Anwender beeinflussbaren Kriterien in der Auswerteeinheit 5 analysiert und aufbereitet werden, sind die Ventile 10 über die Auswerteeinheit 5 derart steuerbar, dass am Ort eines im Untergrund aufgefundenen Elements eine sichtbare Markierung erzeugbar ist. Die Markierung kann ein- oder mehrfarbig sein; sie kann als Punkt, als Linie, mit Graustufen, mit unterschiedlichen Breitenusw. ausgebildet sein. Die Markierung kann auch alphanumerische Zeichen und Symbole enthalten. Beispielsweise kann die Markierung die über die Anzeigeeinheit 17 angezeigte Information teilweise oder auch zur Gänze wiedergeben.

## Patentansprüche

1. Vorrichtung zur Anzeige von Orten auf einer Oberfläche eines Bauteils, an denen mit Hilfe einer Detektionseinrichtung (1) unterhalb der Oberfläche liegende Elemente aufgefunden werden, mit einem Abtastkopf (3), einer Positionsmesseinrichtung (4) und einer in einem Gehäuse (2) angeordneten Auswerteeinheit (5), **dadurch gekennzeichnet, dass** die Auswerteeinheit (5) mit einer Markiereinrichtung (6) verbunden ist, die derart mit der Auswerteeinheit (5) zusammenwirkt, dass am Ort eines von der Detektionseinrichtung (1) mit mehreren Sensoren (13a-13g) im Abtastkopf (3) detektierten Elements an der Oberfläche des Bauteils automatisch eine sichtbare Markierung anbringbar ist, wobei die Markiereinrichtung (6) wenigstens einen Behälter (8) für eine Markierflüssigkeit, eine Aufbringeinheit mit mehreren Auftragdüsen (9, 9a-9g) und einer Auslöseeinrichtung (10) umfasst sowie mehrere Sensoren (13a-13g) im Abtastkopf (3) jeweils mit einer Auftragsdüse (9a-9g) verbunden sind.

2. Vorrichtung nach Anspruch 1, **dadurch gekennzeichnet, dass** die Markiereinrichtung (6) bezogen auf eine vorgesehene Bewegungsrichtung (S) der Vorrichtung in einem definierten Abstand hinter dem Abtastkopf (3) angeordnet ist, und nach dem Weiterbewegen der Vorrichtung um den Abstand zwischen dem Abtastkopf (3) und der Markiereinrichtung (6) am Ort des von der Detektionseinrichtung (1) unter der Oberfläche des Bauteils detektierten Elements automatisch aktivierbar ist.

3. Vorrichtung nach Anspruch 1, **dadurch gekennzeichnet, dass** die Auftragdüsen (9a - 9g) in Zeilenform, senkrecht zur vorgesehen Bewegungsrichtung (S) der Vorrichtung angeordnet sind.

4. Vorrichtung nach Anspruch 3, **dadurch gekennzeichnet, dass** die Anzahl der Auftragdüsen (9a - 9g) der Anzahl von Sensoren (13a - 13g) im Abtastkopf (3) entspricht und jedem Sensor (13a - 13g) eine Auftragdüse (9a - 9g) zugeordnet ist, die gesondert ansteuerbar ist.

5. Vorrichtung nach Anspruch 1, **dadurch gekennzeichnet, dass** die Auftragdüsen (9a-9g) entsprechend der von einem oder mehreren im Abtastkopf (3) angeordneten Sensoren (13) gelieferten Steuerinformationen quer zur Bewegungsrichtung (S) der Vorrichtung bewegbar sind.

6. Vorrichtung nach Anspruch 1, **dadurch gekennzeichnet, dass** die Auftragdüsen (9a-9g) in einer zur Oberfläche des Bauteils parallelen Ebene drehbar gelagert sind und deren Drehwinkel in Abhängigkeit von der von einem oder mehreren im Abtastkopf (3) angeordneten Sensoren (13) gelieferten Steuerinformationen einstellbar ist.

7. Vorrichtung nach einem der vorangehenden Ansprüche, **dadurch gekennzeichnet, dass** der Abtastkopf (3) einen oder mehrere Sensoren (13; 13a - 13g) umfasst, die austauschbar im Abtastkopf (3) angeordnet sind.

8. Vorrichtung nach einem der Ansprüche 1 und 4-8, **dadurch gekennzeichnet, dass** jeder Auftragdüse (9a - 9g) ein Behälter (8) für die Markierflüssigkeit zugeordnet ist.

9. Vorrichtung nach einem der vorangehenden Ansprüche, **dadurch gekennzeichnet, dass** die Markiereinrichtung (6) zur visuellen Kennzeichnung des Ortes eines detektierten Elements und zur Wiedergabe von Zusatzinformationen, wie beispielsweise die festgestellte Tiefe, ausgebildet ist.

10. Vorrichtung nach einem der vorangehenden Ansprüche, **dadurch gekennzeichnet, dass** die Auswerteeinheit (5) mit einer Eingabeeinheit (15) verbunden ist.

11. Vorrichtung nach einem der vorangehenden Ansprüche, **dadurch gekennzeichnet, dass** die Markiereinrichtung (6) in einem separaten Gehäuse (7) angeordnet ist, das lösbar mit dem Gehäuse (2) der Detektionseinrichtung (1) verbindbar ist, wobei an den Gehäusen (2, 7) Verbindungsschnittstellen (11, 12) vorgesehen sind, über welche die beiden Einrichtungen (1, 6) signalmässig und energetisch koppelbar sind.

## Claims

1. A device for indicating on a surface of a structural member places where detection means (1) have located elements lying underneath the surface, said device comprising a sensor head (3), position-measuring means (4) and an evaluation unit (5) which is disposed in a housing (2), **characterized in that** the evaluation unit (5) is connected to a marking device (6), which cooperates with the evaluation unit (5) in such a way that a visible mark can automatically be made on the surface of the structural member at the point where an element is detected by the detection means (1) via a plurality of sensors (13a, 13g) disposed in the sensor head (3), wherein said marking device (6) comprises at least one container (8) for a marking fluid, an applicator unit with a plurality of applicator nozzles (9, 9a - 9g) and a trigger mechanism (10), and the plurality of sensors (13a - 13g) in the sensor head (3) are in each case respectively connected to an applicator nozzle (9a - 9g).

2. A device according to Claim 1, **characterized in that**, relative to a given direction of movement (S) of the device, the marking device (6) is disposed a specific distance behind the sensor head (3) and, after the device has moved on by the distance between said sensor head (3) and marking device (6), is automatically activated at the point where the element underneath the surface of the structural member has been detected by the detection means (1).

3. A device according to Claim 1, **characterized in that** the applicator nozzles (9a - 9g) are arranged in a line extending perpendicular to the given direction of movement (S) of the device.

4. A device according to Claim 3, **characterized in that** the number of applicator nozzles (9a - 9g) corresponds to the number of sensors (13a - 13g) in the sensor head (3), and one applicator nozzle (9a - 9g), which can be controlled independently, is associated with each sensor (13a - 13g).

5. A device according to Claim 1, **characterized in that** the applicator nozzles (9a - 9g) can be moved perpendicular to the direction of movement (S) of the device in accordance with control information supplied by one or more sensors (13) disposed in the sensor head (3).

6. A device according to Claim 1, **characterized in that** the applicator nozzles (9a - 9g) are rotatably mounted in a plane extending parallel to the surface of the structural member and their angle of rotation can be adjusted as a function of control information supplied by one or more sensors (13) disposed in the sensor head (3).

7. A device according to one of the preceding claims, **characterized in that** the sensor head (3) has one or more sensors (13; 13a - 13g) which are disposed in said sensor head (3) in such a way as to be replaceable.

8. A device according to one of Claims 1 and 4 - 8, **characterized in that** a container (8) for marking fluid is associated with each applicator nozzle (9a - 9g).

9. A device according to one of the preceding claims, **characterized in that** the marking device (6) is designed to visibly mark the location of a detected element and to provide additional information, such as for example the detected depth.

10. A device according to one of the preceding claims, **characterized in that** the evaluation unit (5) is connected to an input unit (15).

11. A device according to one of the preceding claims, **characterized in that** the marking device (6) is disposed in a separate housing (7), which can be detachably connected to the housing (2) of the detection means (1), connecting interfaces (11, 12) being provided on the housings (2, 7) by which the two devices (1, 6) can be coupled for the transmission of signals and supply of power.

## Revendications

1. Dispositif pour repérer, à la surface d'un élément de construction, des emplacements auxquels des éléments situés sous la surface sont détectés à l'aide d'un dispositif de détection (1), comprenant une tête de palpage (3), un dispositif de mesure de position (4) et un module d'analyse (5) disposé dans un boîtier (2), **caractérisé en ce que** le module d'analyse (5) est relié à un dispositif de marquage (6) qui coopère avec le module d'analyse (5) de façon qu'à l'emplacement d'un élément détecté à la surface de l'élément de construction par le dispositif de détection (1) au moyen de plusieurs capteurs (13a-13g) dans la tête de palpage (3) soit appliqué un marquage visible, le dispositif de marquage (6) comprenant au moins un récipient (8) pour un liquide de marquage, un module d'application avec plusieurs buses applicatrices (9, 9a-9g) et un dispositif de déclenchement (10), et plusieurs capteurs (13a-13g) situés dans la tête de palpage (3) étant chacun reliés à une buse applicatrice (9a-9g).

2. Dispositif selon la revendication 1, **caractérisé en ce que**, par rapport à une direction de déplacement prévue (S) du dispositif, le dispositif de marquage (6) est disposé à une distance définie derrière la tête de palpage (3) et, après que le dispositif a avancé de la distance séparant la tête de palpage (3) et le dispositif de marquage (6), est activé automatiquement à l'emplacement de l'élément détecté sous la surface de l'élément de construction par le dispositif de détection (1).

3. Dispositif selon la revendication 1, **caractérisé en ce que** les buses applicatrices (9a-9g) sont disposées en ligne, perpendiculairement à la direction de déplacement prévue (S) du dispositif.

4. Dispositif selon la revendication 3, **caractérisé en ce que** le nombre de buses applicatrices (9a-9g) correspond au nombre de capteurs (13a-13g) dans la tête de palpage (3), et à chaque capteur (13a-13g) est associée une buse applicatrice (9a-9g) qui est actionnable individuellement.

5. Dispositif selon la revendication 1, **caractérisé en ce que** les buses applicatrices (9a-9g) sont déplaçables transversalement à la direction de déplacement (S) du dispositif en fonction des informations de commande fournies par un ou plusieurs capteurs (13) disposés dans la tête de palpage (3).

6. Dispositif selon la revendication 1, **caractérisé en ce que** les buses applicatrices (9a-9g) sont montées à rotation dans un plan parallèle à la surface de l'élément de construction, et leur angle de rotation est réglable en fonction des informations de commande fournies par un ou plusieurs capteurs (13) disposés dans la tête de palpage (3).

7. Dispositif selon une des revendications précédentes, **caractérisé en ce que** la tête de palpage (3) comprend un ou plusieurs capteurs (13 ; 13a-13g) qui sont disposés de manière échangeable dans la tête de palpage (3).

8. Dispositif selon une des revendications 1 et 4-8, **caractérisé en ce qu'**à chaque buse applicatrice (9a-9g) est associé un récipient (8) pour le liquide de marquage.

9. Dispositif selon une des revendications précédentes, **caractérisé en ce que** le dispositif de marquage (6) est conçu pour distinguer visuellement l'emplacement d'un élément détecté et pour reproduire des informations supplémentaires, comme par exemple la profondeur constatée.

10. Dispositif selon une des revendications précédentes, **caractérisé en ce que** le module d'analyse (5) est relié au module d'entrée (15).

11. Dispositif selon une des revendications précédentes, **caractérisé en ce que** le dispositif de marquage (6) est disposé dans un boîtier séparé (7) qui est relié de manière détachable au boîtier (2) du dispositif de détection (1), sur les boîtiers (2, 7) étant prévues des interfaces de liaison (11, 12) par l'intermédiaire desquelles les deux dispositifs (1, 6) peuvent être accouplés sur le plan des signaux et de l'énergie.
